# EUROPEAN PATENT SPECIFICATION

(11) **EP 2 619 946 B1**
(45) Date of publication and mention of the grant of the patent: **16.07.2014**
(21) Application number: 10762623.6
(22) Date of filing: 21.09.2010
(51) Int. Cl.: H04L 12/801, H04L 12/803, H04L 12/811, H04L 12/891, H04L 12/707, H04L 1/00

(54) **METHOD AND NETWORK DEVICES FOR SPLITTING OF A DATA STREAM**
VERFAHREN UND NETZWERKVORRICHTUNG ZUR TEILUNG EINES DATENSTROMS
PROCÉDÉ ET DISPOSITIFS DE RÉSEAU POUR LA DIVISION D'UN FLUX DE DONNÉES

(43) Date of publication of application: 31.07.2013
(73) Proprietor: Nokia Solutions and Networks Oy, 02610 Espoo (FI)
(72) Inventor: NEVOLA, Alessandro, I-24047 Treviglio (IT); PASQUIN, Stefano, I-20060 Gessate (IT)
(74) Representative: Borgström, Markus
(86) International application number: PCT/EP2010/063917
(87) International publication number: WO 2012/037970

(56) References cited:
- WO-A1-2008/109415
- WO-A2-2010/056654
- US-A1- 2004 052 273

## Description

### Technical Field

Embodiments of the present invention relate generally to wireless communications and more particularly to network devices and methods in wireless communication networks. The invention relates to a method for splitting of a data stream. Moreover, the invention relates to network devices, to a communication system, to a computer program product and to a computer-readable medium.

### Background

In communication systems microwaves may be utilized for transmission of data. Microwaves are electromagnetic waves in the frequency range of about 1 GHz to about 30 GHz corresponding to wavelengths between about 30 cm and about 1 cm. Microwaves may be used for transmitting digital signals as well as analog signals between a plurality of locations, for example two locations. The connections may be built up in a line-of-sight connection or nearly-line-of-sight connection. Depending on the weather conditions, especially on humidity and rain, the attenuation conditions along the propagation path may vary.

A communication system may comprise several radio channels which use different frequencies and/or polarizations. A plurality of radio channels may be combined into a radio link. One aspect to use several radio channels in parallel may be to add additional link capacity. However, when scaling up the system for providing a plurality of radio channels, there may be an opportunity to make the system more reliable by introducing additional redundancy.

In order to protect a radio link against a degradation or a failure of a single radio channel there may be different solutions.

EP 1 411 745 B1 "Packet switching for packet data transmission systems in a multi channel radio arrangement" describes a system with channel protection. A channel protection may be provided by transmitting the same information over two radio channels. Extra bandwidth may be made available in a co-channel system, i.e. by using the cross polarized channel.

As far as Ethernet packet networks are concerned, the usage of multiple links in parallel to increase the speed beyond the limit of the single link may be commonly based upon the LACP (Link Aggregation Control Protocol), defined in IEEE 802.1AX-2008 (previously clause 43 of IEEE 802.3-2005 Ethernet Standard). In this standard the Ethernet packets may be assigned to a physical link belonging to the link aggregation group according to some specific values in the packet header, e.g. the source or destination MAC addresses or the Ethernet type field. A common approach may be to apply a hash function to the selected information to generate the link number over which the packet may be transmitted. The hash function approach may work well when the links have a constant capacity. This may be not the case with a microwave radio link operating with adaptive modulation and coding. The hash function approach may also work well when the data packets belong to a big number of conversations. In such a case the hash function may balance the load among the links. Utilizing a hash function in relation to microwave links may cause problems. This may reduce the usage of individual microwave channels.

WO 2008/109415 "Multi-Band Channel Aggregation" discloses aggregating a first and a second channel, whereby these channels are each individually properly formed communication channels. Transmitting a given set of data via a link of smaller bandwidth needs more time than transmitting it via a link of greater bandwidth. Therefore aggregating channels according to the teaching of the WO 2008/109415 does not reduce the delay compared with the delay of not aggregated individual links. Besides this care must be taken that the data transmitted via the aggregated links do not overtake each other this way changing the sequential arrangement of the data when recombining them at the receiving side.

There may be a need to provide a more efficient usage of microwave channels.

### Summary of the Invention

According to an aspect of the invention there may be provided a method for splitting of a data stream. The method may comprise splitting a data stream into a first partial stream and a second partial data stream, transmitting or sending the first data stream over a first path comprising a first channel and transmitting or sending the second data stream over a second path comprising a second channel. Moreover, the method may comprise receiving the first data stream and the second data stream and merging the first data stream and the second data stream into an output data stream, wherein the splitting may be performed according to a capacity of the first channel and to a capacity of the second channel. The operation of merging may depend on the previous splitting of the data stream.

The method may provide a usage of the entire or almost entire capacity available over all radio channels. Moreover, there may be provided a protection of the overall radio link against phenomena affecting individual radio channels.

According to an exemplary embodiment of the present invention the data may be split into blocks of one or more bytes.

This may be performed independently of a potential packet framing of the data to be split. The transmission of the individual bytes of a packet frame in parallel over more than one channel may have the implication that the frame will be transmitted in a shorter time, i.e. with a greater transmission speed, as if it were sent over only one channel. Transmitting the individual bytes in parallel over more than one channel may reduce the latency, which is of special importance for services sensitive to delay, like IEEE 1588 Timing over Packet, or Circuit Emulation Services-over-Packet (CESoP). In addition no storage of entire packet frames may be required, and no necessity for re-ordering the packet frames may arise, as it might happen when sending entire frames over the individual partner channels, e.g. when using a packet based strategy for splitting the data traffic.

According to an exemplary embodiment of the present invention the split data may be embedded in frames of a duration which is the same for the first channel and the second channel independent of the actual channel capacity of the first channel and the second channel.

According to an exemplary embodiment of the present invention the data may be split according to predefined profiles.

According to an exemplary embodiment of the present invention the predefined profiles may be stored in pre-calculated parameter arrays.

According to an exemplary embodiment of the present invention the capacity of each channel may be matched to the actual transmission conditions by Adaptive Coding and Modulation.

The capacity of one channel may change independently from that of the other channel, e.g. according to the Adaptive Coding and Modulation (ACM) scheme chosen due to the transmission conditions on the channel. This transition may be hitless by changing the ACM scheme at the beginning of a new radio frame.

According to an exemplary embodiment of the present invention the channel capacity of a channel may be set to zero, if at least one quality parameter of the channel falls below a predefined threshold, e.g. due to a low signal-to-noise ratio.

In this case the channel may be configured to a "No Data Mode", and no payload, but only padding data should be transmitted over this channel. Otherwise the defective data of this channel would corrupt the payload of all channels: The defective data of this channel would be combined with the data of the other channels to a corrupted data stream. With the "No Data Mode" the payload is transmitted only over functional channels, and even the total failure of an individual channel may be compensated.

According to an exemplary embodiment of the present invention a network device for splitting of a data stream comprising a bandwidth controller and a splitter may be provided.

The bandwidth controller may be adapted to control the splitter. The splitter may be adapted to split the data stream into a first partial data stream and a second partial data stream, to transmit the first partial data stream over a first path comprising a first channel and to transmit the second partial data stream over a second path comprising a second channel. The bandwidth controller may be adapted to control a splitting, wherein the splitting is performed according to a first capacity of the first channel and to a second capacity of the second channel.

According to an exemplary embodiment of the present invention a network device for merging a first partial data stream and a second partial data stream may be provided

The network device may comprise a bandwidth controller and a merger. The bandwidth controller may be adapted to control the merger. The merger may be adapted to receive the first partial data stream, to receive the second partial data stream and to merge the first partial data stream and the second partial data stream into an output data stream. The bandwidth controller may be adapted to control a merging, wherein the merging may be performed according to a first capacity of the first channel and to a second capacity of the second channel.

According to an exemplary embodiment of the present invention a system comprising
a first network device and a second network device may be provided.

The first network device may be connected with the second network device over a first path and over a second path.

According to an exemplary embodiment of the present invention a system may be provided, wherein the first path and the second path may be operated in parallel.

Parallel may be understood in the sense of the parallelity of electrical lines, but also in the sense of the synchronous operation of electrical devices.

According to an exemplary embodiment of the present invention a system may be provided, wherein the bandwidth controller receives information on the capacity of the first channel from a first Adaptive Coding and Modulation engine and information on the capacity of the second channel from a second Adaptive Coding and Modulation engine.

An Adaptive Coding and Modulation engine may be a device which may, depending on the quality of a channel, decide on a coding and modulation scheme for this channel and this way define the capacity of this channel.

According to an exemplary embodiment of the present invention a computer program product may be provided comprising code portions for causing a network device on which the computer program may be executed to carry out the data splitting or the data merging.

According to an exemplary embodiment of the present invention a computer-readable medium may be provided embodying the computer program product.

### Brief Description of the Drawings

Embodiments of the present invention are described below with reference to the accompanying drawings, wherein:
Fig. 1 illustrates an exemplary embodiment of a transmission section of a system,
Fig. 2 illustrates an exemplary embodiment of a receiving section of a system,
Fig. 3 illustrates a method according to an exemplary embodiment of the present invention,
Fig. 4 illustrates an exemplary embodiment of a data splitting section of a system,
Fig. 5 illustrates an exemplary embodiment of a data merging section of a system,
Fig. 6 illustrates an exemplary embodiment of a suitable structure for storing the pre-calculated data of a system, and
Fig. 7 illustrates an exemplary embodiment of a method according to an aspect of the present invention.

### Detailed Description

The illustration of the drawings is schematic. In different drawings, similar or identical elements are provided with the same reference numerals.

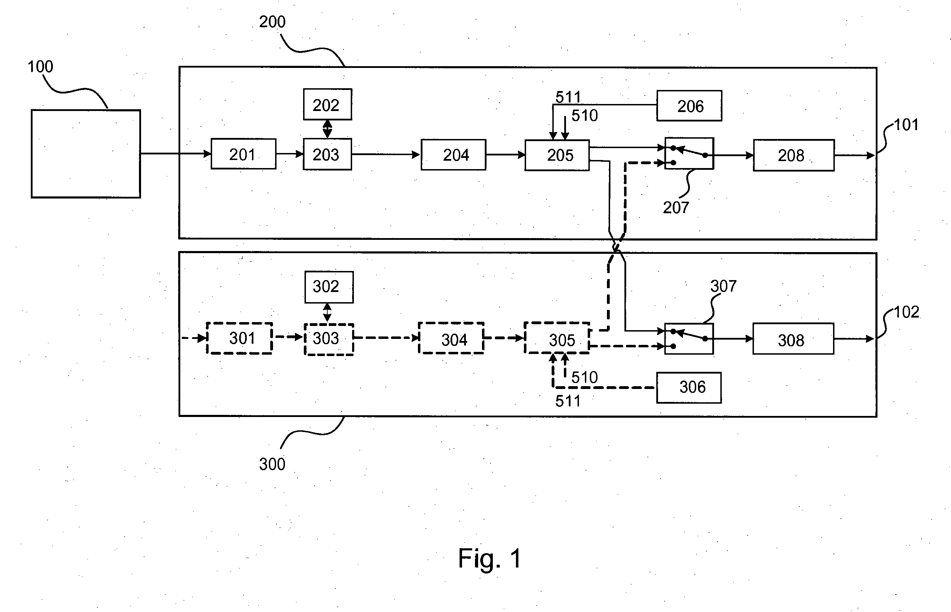

The exemplary embodiments in Fig. 1 to Fig. 7 show a system comprising two radio channels. The system may be a frequency diversity system with two channels on different frequencies or a co-channel system with two orthogonally polarized channels including Cross Polar Interference Cancellers ("XPICs"). The system may be generalized to a system with more radio channels using different frequencies and one or two polarizations. Adaptive Coding and Modulation (ACM) may be included in the embodiment as well.

In the exemplary embodiment with two radio channels the system may comprise on each side of the radio link one In Door Unit (IDU) 100 and two Out Door Units (ODUs) 200, 300. Each Out Door Unit has three interfaces: An interface with the In Door Unit (IDU) 100, a radio interface 101 or 102, which may be proprietary, for exchanging data with the remote partner of the radio link, and an interface to the co-located Out Door Unit, which may be proprietary, for performing the functionalities described in the following.

The two ODUs 200, 300 at the same side of the radio link may be designated as "master" and "slave". The master ODU 200 is the one linked to the IDU 100. Besides its radio interface functionality it manages the centralized functions, such as Layer 2 and/or Layer 3 functionalities, e.g. Ethernet switching, as well as the bandwidth sharing and bandwidth merging algorithms, which are the very object of the invention. The slave ODU 300 receives the data payload to be transmitted as well as the management and control data from the master ODU 200 and is used mainly as an additional radio interface increasing the radio link capacity. It should be mentioned that from an IDU perspective the overall capacity is seen as a single bundle, i.e. the IDU perceives the two radio channels as a single radio link with double capacity.

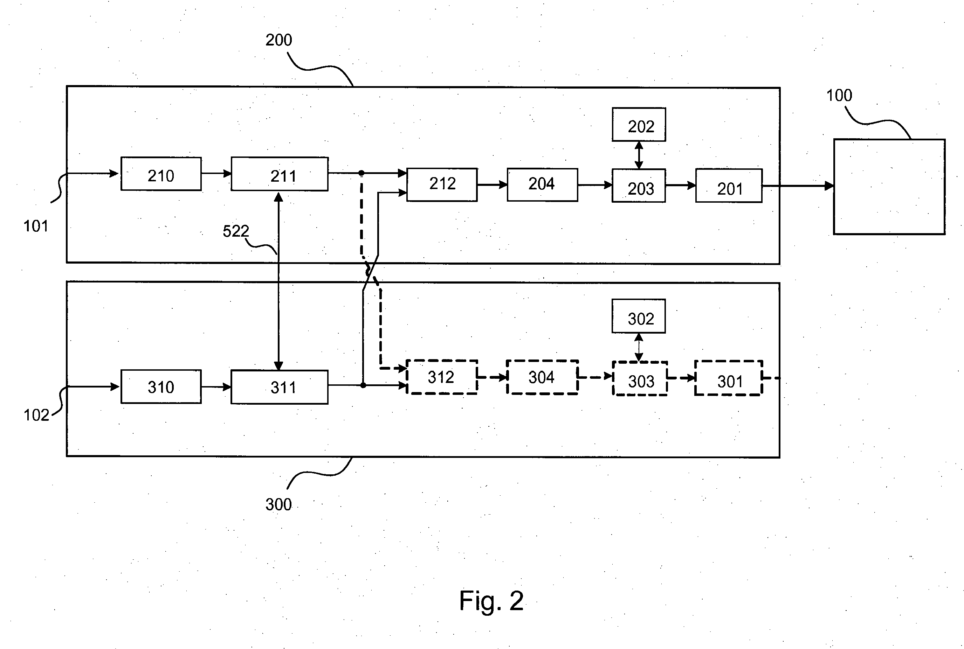

Dashed lines and dashed blocks in Fig. 1 and Fig. 2 may not participate in the bandwidth sharing and merging described in the following; they may be unused parts of the slave ODU 300 which may be used for protection switching in the case of a partial failure of the master ODU 200. For a protection switching functionality the IDU 100 may be connected with both the master ODU 200 and the slave ODU 300 at the Cable Interfaces 201 and 301. In case of a failure of e.g. the components 201, 203, 204, 205 or 212 the Protection Switch 207 of the master ODU 200 and the Protection Switch 307 of the slave ODU 300 may be switched and the Cable Interface 301 may be activated. The former master ODU 200 may then work as slave ODU and the former slave ODU 300 may then work as master ODU.

**Fig. 1** illustrates an exemplary embodiment of a transmission section of a system. An In Door Unit 100 may be connected to a master ODU 200. Over a Cable Interface 201, an Ethernet Switch 203, controlled by a microcontroller 202, and an HDLC Framer 204 data may be conveyed to a Bandwidth Sharing Unit 205.

A Bandwidth Sharing Unit 205 may get a PHY profile from an ACM Engine 206 over a link 511 and a PHY profile from an ACM Engine 306 of a co-located ODU over a link 510; PHY is a common abbreviation for the physical layer of the Open Systems Interconnection (OSI) model. The Adaptive Coding and Modulation engines 206 and 306 may decide, depending on the quality of radio channels 101 and 102, on the coding and modulation scheme of the radio channels and this way define the bandwidth of the respective radio links. This bandwidth information may govern the splitting operation of a Bandwidth Sharing Unit 205 which may allocate the data to the radio channels 101 and 102. The data may be routed over Protection Switches 207 and 307 and Coding, Modulation and Radio Frequency Interfaces 208 and 308 to the radio channels 101 and 102.

**Fig. 2** illustrates an exemplary embodiment of a receiving section of a system. Signals from radio channels 101 and 102 may be received in Radio Frequency Interfaces 210 and 310 and may be conditioned, demodulated and decoded in Cross Polar Interference Cancelling, Demodulation and Decoding Units 211 and 311. Over a Cross Channel for a Cross Polar Interference Canceller 522 information necessary for cancelling the cross talk between the both polarization modes may be exchanged.

Two data streams decoded by units 211 and 311 may be merged in a Bandwidth Merger 212. The combined data stream may be conveyed over an HDLC Framer 204, an Ethernet Switch 203, controlled by a microcontroller 202, and a Cable Interface 201 to an In Door Unit 100.

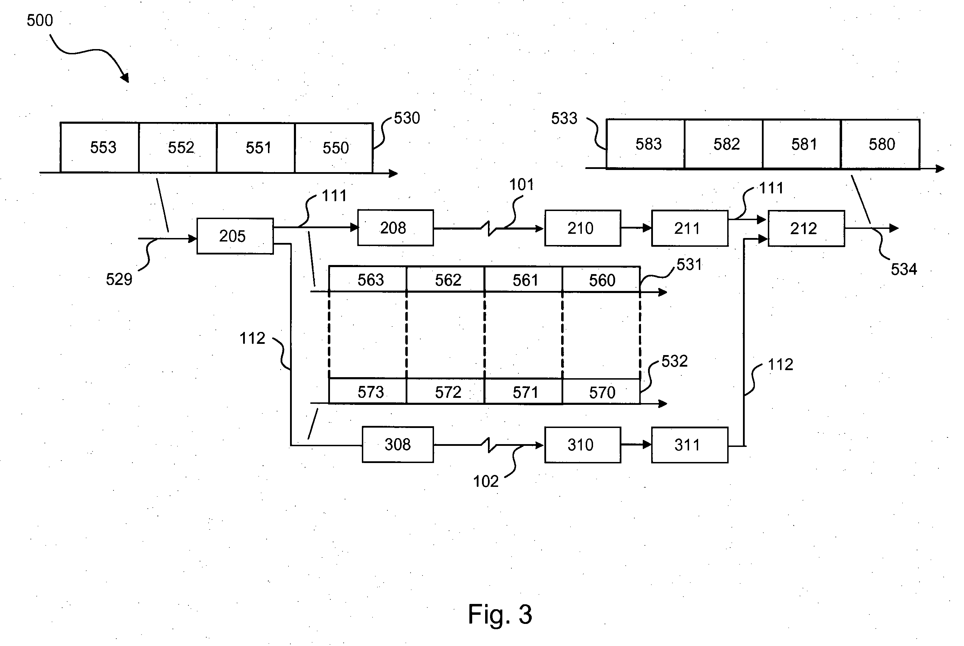

**Fig. 3** illustrates a communication system 500 using a method according to an exemplary embodiment of the present invention. An incoming data stream 530 may comprise a plurality of data packets 550, 551, 552, 553. The data stream 530 may arrive via an incoming data link 529 at a first unit 205, which may split the incoming data stream 530 into two partial data streams 531, 532. The first partial data stream 531 may comprise packets 560, 561, 562, 563 and may be conveyed over a transmission path 111 comprising a transmission unit 208, a radio channel 101 and receiving devices 210 and 211. The second partial data stream 532 may comprise packets 570, 571, 572, 573 and may be conveyed over a transmission path 112 comprising a transmission unit 308, a radio channel 102 and receiving devices 310 and 311. The two radio channels 101, 102 may be e.g. the two polarizations in a co-channel case, or two frequencies in a frequency diversity case. Both data streams may be merged in a further device 212 and sent to a outgoing data link 534. The output of 212 may be a merged outcoming data stream 533. The data stream 533 may comprise data packets 580, 581, 582, 583.

The data structure in the partial data streams 531, 532 may be characterized by synchronous frames on both transmission paths 111 and 112, named "radio frames" in the following. The Bandwidth Sharing Unit 205 may generate these radio frames, one for the master ODU 200 and one for the slave ODU 300. These frames may move synchronously over the transmission paths 111 and 112 and may be terminated synchronously at a merging device 212. A delay compensation may be foreseen in the device 212 for the frame time realignment. The radio frames may be of fixed time duration and may contain a pre-determined number of bytes according to the actual channel capacity of either transmission path 111 and 112. They may ignore a potential framing of the incoming data stream 530, e.g. an Ethernet framing, regarding the incoming data stream 530 just as a rough flow of data bytes to be split to either transmission path 111 and 112.

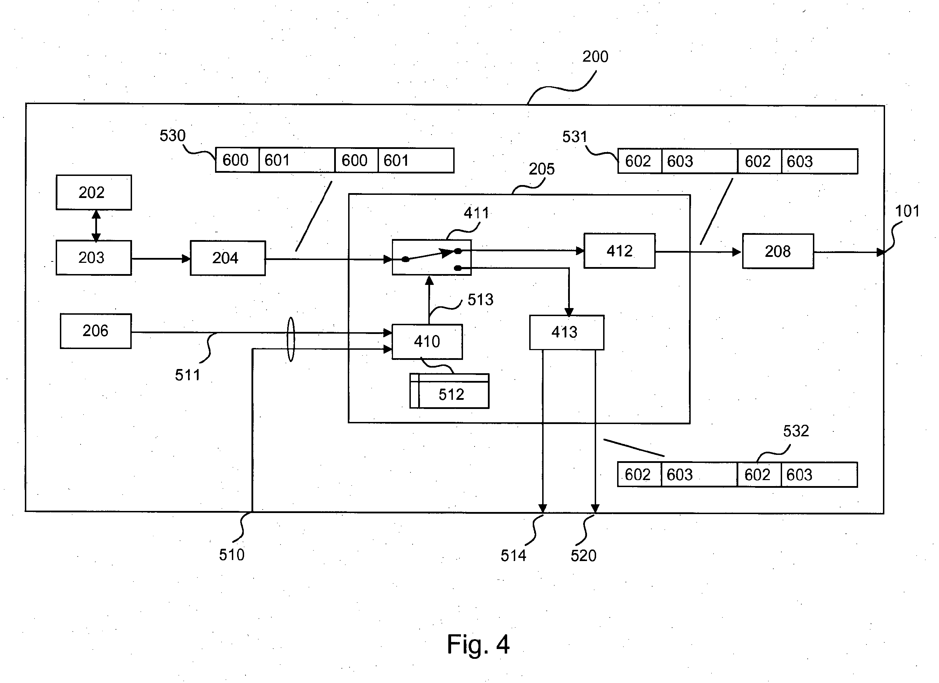

**Fig. 4** illustrates an exemplary embodiment of a data splitting section of a system. Over an Ethernet Switch 203, which may be controlled by a microcontroller 202, and over an HDLC Framer 204 an incoming data stream 530 may be conveyed to a Bandwidth Sharing Unit 205 comprising a Splitter 411, a Bandwidth Controller 410 with a memory 512 and Radio Framers 412 and 413. The Bandwidth Sharing Unit 205 may get a PHY profile from an ACM Engine 206 over a link 511 and a PHY profile from an ACM Engine 306 of a co-located ODU over a link 510. On the basis of these data and supported by a pre-calculated data table stored in a memory 512 a Bandwidth Controller 410 may generate a Switch Control Signal 513, which may govern the switching operation of a Splitter 411.

The two data streams generated by the Splitter 411 may be routed to the Radio Framers 412 and 413. In the Radio Framers 412 and 413 the frame format may be changed: The incoming data stream 530 at the interface between the HDLC Framer 204 and the Splitter 411 may have the classical Ethernet format with an Ethernet header 600 and an Ethernet payload 601, whereas in the partial data stream 531 at the link from the Radio Framer 412 to a Radio Interface 208 and in the partial data stream 532 at the data link 520 to the co-located ODU the Ethernet data are encapsulated forming radio frames with a radio frame header 602 and a payload 603.

The partial data stream 531 may be routed over the Radio Interface 208 to the radio channel 101, another partial data stream 532 may be routed over an interface link 520 to a co-located ODU. An additional interface link 514 may carry a transmission frame synchronization signal to the co-located ODU.

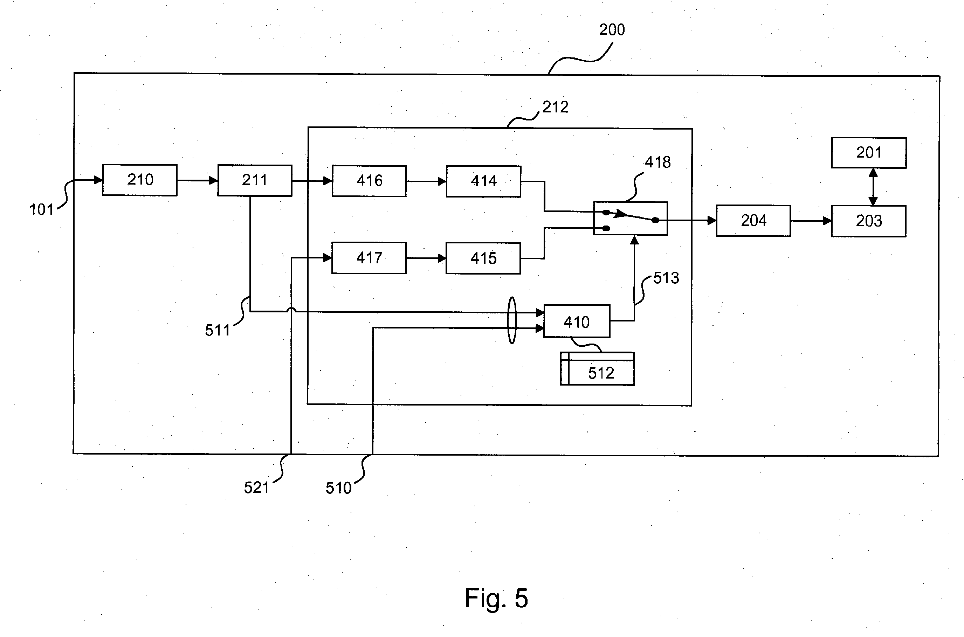

**Fig. 5** illustrates an exemplary embodiment of a data merging section of a system. A signal from a radio channel 101 may be received in a Radio Frequency Interface 210 and may be conditioned, demodulated and decoded in an XPIC, Demodulation and Decoding Unit 211. The data decoded by the unit 211 and the data delivered by a co-located ODU via a link 521 may be merged in a Bandwidth Merger 212 comprising a Merger 418, a Bandwidth Controller 410 with a memory 512, Radio De-framers 416 and 417 and Payload Buffers 414 and 415. The Radio De-framers may eliminate the radio frames and may reconstruct the former partial data streams from the radio frame payloads. The Unit 211 may provide a PHY profile of the radio channel 101; together with a PHY profile of a radio channel 102 delivered by a co-located ODU over a link 510 and supported by a pre-calculated data table stored in a memory 512 a Bandwidth Controller 410 may generate a Switch Control Signal 513, which may govern the operation of a Merger 418. The data stream merged in the Bandwidth Merger 212 may be conveyed over a HDLC Framer 204 to an Ethernet Switch 203, which may be controlled by a microcontroller 202.

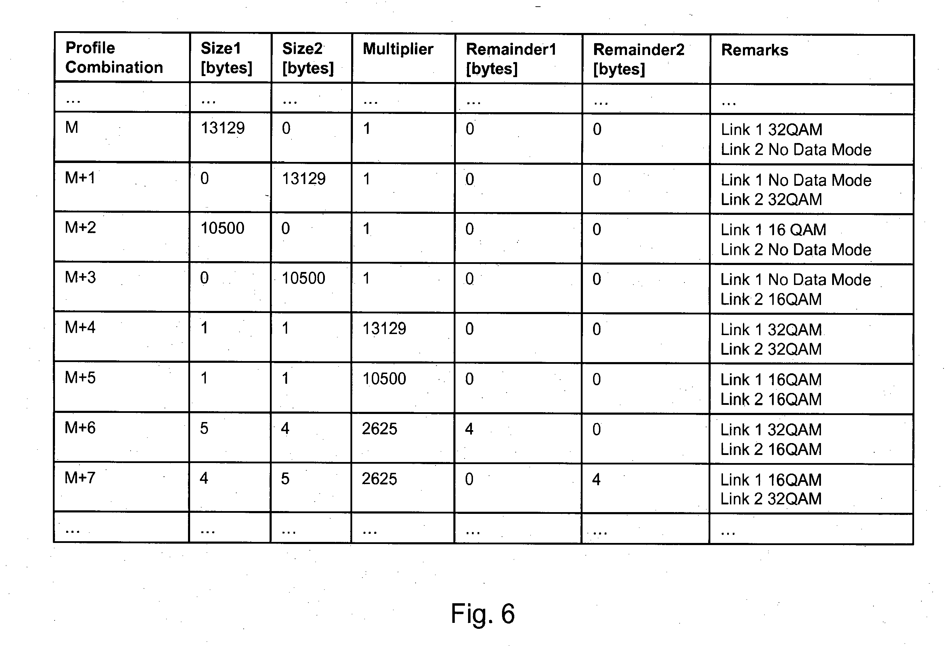

**Fig. 6** illustrates an exemplary embodiment of a suitable structure for storing the pre-calculated data of a system. This example refers to the possible ACM states 32QAM, 16QAM, and "No Data Mode" in the two radio channels each having a radio frequency bandwidth of 28 MHz. A Quadrature Amplitude Modulation (QAM) may be understood as a modulation scheme conveying two digital bit streams by modulating the amplitudes of two carrier waves. These two waves, usually sinusoids, are out of phase with each other by 90° and are thus called quadrature carriers or quadrature components. With 32QAM modulation 13129 Bytes may be carried per radio frame and with 16QAM modulation 10500 Bytes may be carried per radio frame.

The "Multiplier", see fourth column in Fig. 6, indicates how many times the switches in the Splitter and in the Merger may perform a switching action for sending and receiving "Size1" and "Size2" bytes on channel 1 and channel 2. Two other counters "Remainder1" and "Remainder2" may be utilized to manage the remainder bytes which complete the radio frame.

As an example the profile combination "M+6" may be considered representing 32QAM on channel 1 and 16QAM on channel 2. Here groups of 5 and 4 bytes are sent alternatively over channel 1 and channel 2 for 2625 times. After that 4 more bytes are sent over channel 1. This gives together 2625 x 5 + 4 Bytes = 13129 Bytes for channel 1, i.e. the link capacity for 32QAM, and 2625 x 4 Bytes = 10500 Bytes for channel 2, i.e. the channel capacity for 16QAM. So following this splitting instruction both channel are entirely used according to their actual channel capacity.

At the next frame a different combination, i.e. row in Fig. 6 can be selected, according to the radio propagation conditions.

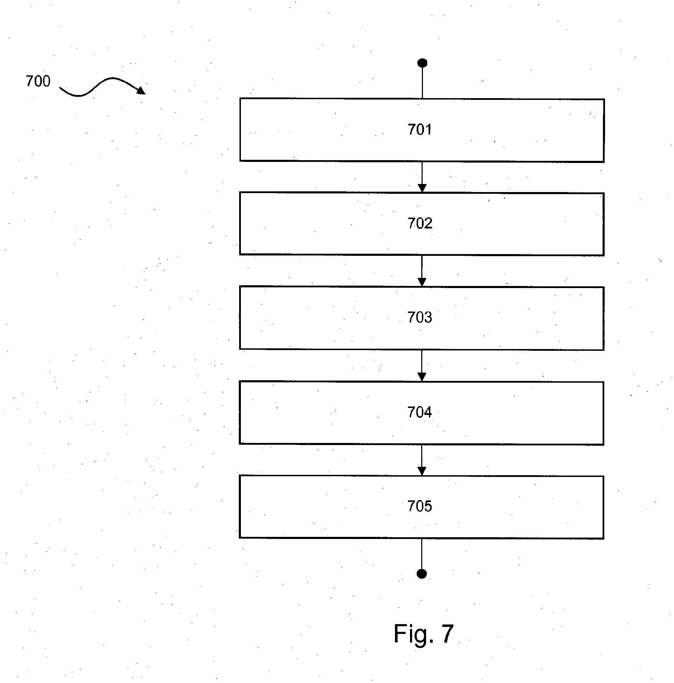

**Fig. 7** illustrates an exemplary embodiment of a method 700 according to an aspect of the present invention.

The method may comprise splitting of a data stream into a first partial data stream and a second partial data stream according to a capacity of a first channel and a capacity of a second channel, see box 701, transmitting the first partial data stream over a first path comprising the first channel, see box 702, and transmitting the second partial data stream over a second path comprising the second channel, see box 703.

The method may further comprise receiving the first partial data stream and the second data partial stream, see box 704, and merging the first partial data stream and the second partial data stream into an output data stream according to the capacity of the first channel and the capacity of the second channel, see box 705.

It may be understood, that further boxes or operations may be added.

In general it is to be noted that respective functional elements according to above-described aspects can be implemented by any known means, either in hardware and/or software, respectively, if it is only adapted to perform the described functions of the respective parts. The mentioned method steps can be realized in individual functional blocks or by individual devices, or one or more of the method steps can be realized in a single functional block or by a single device.

Furthermore, method steps and functions likely to be implemented as software code portions and being run using a processor at one of the entities are software code independent and can be specified using any known or future developed programming language such as e.g. Java, C++, C, and Assembler. Method steps and/or devices or means likely to be implemented as hardware components at one of the entities are hardware independent and can be implemented using any known or future developed hardware technology or any hybrid of these, such as MOS, CMOS, BiCMOS, ECL, TTL, etc, using for example ASIC components or DSP components, as an example. Generally, any method step is suitable to be implemented as software or by hardware without changing the idea of the present invention. Devices and means can be implemented as individual devices, but this does not exclude that they are implemented in a distributed fashion throughout the system, as long as the functionality of the device is preserved. Such and similar principles are to be considered as known to those skilled in the art.

The network devices or network elements and their functions described therein may be implemented by software, e.g. by a computer program product for a computer, or by hardware. In any case, for executing their respective functions, correspondingly used devices comprise several means and components which are required for control, processing and communication/signaling functionality. Such means may comprise, for example, a processor unit for executing instructions, programs and for processing data, memory means for storing instructions, programs and data, for serving as a work area of the processor and the like (e.g. ROM, RAM, EEPROM, and the like), input means for inputting data and instructions by software (e.g. floppy diskette, CD-ROM, EEPOM, and the like), user interface means for providing monitor and manipulation possibilities to a user (e.g. a screen, a keyboard and the like), interface means for establishing links and/or connections under the control of the processor unit (e.g. wires and wireless interface means, an antenna, etc.) and the like.

Many modifications and other embodiments of the inventions set forth herein will come to mind to one skilled in the art to which these inventions pertain having the benefit of the teachings presented in the foregoing descriptions and the associated drawings. Therefore, it is to be understood that the invention is not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions other than those explicitly described above are also contemplated as may be set forth in some of the appended claims. Although specific terms are employed herein, they are used in a generic and descriptive sense only and not for purposes of limitation.

It should be noted, that reference signs in the claims shall not be construed as limiting the scope of the claims.

### List of Abbreviations

- ACM: Adaptive Coding and Modulation
- CESoP: Circuit Emulation Services-over-Packet
- IDU: In Door Unit
- LACP: Link Aggregation Control Protocol
- ODU: Out Door Unit
- PHY: PHYsical layer
- QAM: Quadrature amplitude modulation
- XPIC: Cross Polar Interference Canceller

### List of References

- 100: In Door Unit (IDU)
- 101, 102: Radio Channels
- 111, 112: Transmission Paths

- 200: Master OutDoor Unit (ODU)
- 201: Cable Interface
- 202: Microcontroller
- 203: Ethernet Switch
- 204: HDLC Framer
- 205: Bandwidth Sharing Unit
- 206: Adaptive Coding and Modulation (ACM) engine
- 207: Protection Switch
- 208: Coding, Modulation, Radio Frequency Interface
- 210: Radio Frequency Interface
- 211: Cross Polar Interference Cancelling, Demodulation, Decoding Unit
- 212: Bandwidth Merger

- 300: Slave OutDoor Unit (ODU)
- 301: Cable Interface
- 302: Microcontroller
- 303: Ethernet Switch
- 304: HDLC Framer
- 305: Bandwidth Sharing Unit
- 306: Adaptive Coding and Modulation (ACM) engine
- 307: Protection Switch
- 308: Coding, Modulation, Radio Frequency Interface
- 310: Radio Frequency Interface
- 311: Cross Polar Interference Cancelling, Demodulation, Decoding Unit
- 312: Bandwidth Merger

- 410: Bandwidth Controller

- 411: Splitter
- 412: Radio Framer for Master ODU
- 413: Radio Framer for Slave ODU
- 414: Payload Buffer for Master ODU
- 415: Payload Buffer for Slave ODU
- 416: Radio De-framer for Master ODU
- 417: Radio De-framer for Slave ODU
- 418: Merger

- 500: Splitting Strategy
- 510: PHY Profile from Co-located Slave ODU
- 511: PHY Profile from own ACM Engine
- 512: Pre-calculated Data for Generation of Switch Control Signal
- 513: Switch Control Signal
- 514: Transmission Frame Synchronization Signal to Co-located Slave ODU
- 520: Data to Co-located ODU Modulator
- 521: Data from Co-located ODU Demodulator
- 522: Cross Channel for Cross Polar Interference Canceller
- 529: Incoming Data Link
- 530: Incoming Data Stream
- 531: Data Stream appointed to Transmission Path 111
- 532: Data Stream appointed to Transmission Path 112
- 533: Outgoing Data Stream
- 534: Outgoing Data Link
- 550, 551, 552, 553: Incoming Data Blocks
- 560, 561, 562, 563: Data Blocks appointed to Transmission Path 111
- 570, 571, 572, 573: Data Blocks appointed to Transmission Path 112
- 580, 581, 582, 583: Re-combined Data Blocks

- 600: Ethernet Header
- 601: Ethernet Payload
- 602: Radio Frame Header
- 603: Radio Frame Payload

- 700: Box comprising an operation of a method

## Claims

1. A method for splitting of a data stream, the method comprising
splitting the data stream (530) into a first partial data stream (531) and a second partial data stream (532);
transmitting the first partial data stream over a first path (111) comprising a first channel (101);
transmitting the second partial data stream over a second path (112) comprising a second channel (102);
receiving the first partial data stream (531);
receiving the second data partial stream (532); and
merging the first partial data stream (531) and the second partial data stream (532) into an output data stream (533);
wherein the splitting is performed according to a first capacity of the first channel (101) and to a second capacity of the second channel (102);
**characterized in that** it is also comprising
splitting the data into blocks of one or more bytes;
embedding the split data in frames of a duration which is the same for the first channel and the second channel.

2. The method according to claim 1 the method further comprising splitting the data according to predefined profiles of an Adaptive Coding and Modulation engine.

3. The method according to claim 2 the method further comprising storing the predefined profiles in pre-calculated parameter arrays.

4. The method according to any of the preceding claims the method further comprising matching the capacity of each channel to the actual transmission conditions by Adaptive Coding and Modulation.

5. The method according to any of the preceding claims the method further comprising setting the channel capacity to zero, if at least one quality parameter of the channel falls below a predefined threshold.

6. A network device (205) for splitting of a data stream comprising
a bandwidth controller (410); and
a splitter (411);
wherein the bandwidth controller (410) is adapted to control the splitter (411);
wherein the splitter (411) is adapted to split the data stream (530) into a first partial data stream (531) and a second partial data stream (532);
wherein the splitter (411) is adapted to transmit the first partial data stream over a first path (111) comprising a first channel (101);
wherein the splitter (411) is adapted to transmit the second partial data stream over a second path (112) comprising a second channel (102);
wherein the bandwidth controller (410) is adapted to control a splitting, wherein the splitting is performed according to a first capacity of the first channel (101) and to a second capacity of the second channel (102);
**characterized in that**
the splitter (411) is adapted to split the data into blocks of one or more bytes
the splitter (411) is adapted to embed the split data in frames of a duration which is the same for the first channel and the second channel.

7. A network device (212) for merging a first partial data stream (531) and a second partial data stream (532), the network device comprising
a bandwidth controller (410); and
a merger (418);
wherein the bandwidth controller (410) is adapted to control the merger (418);
wherein the merger is adapted to receive the first partial data stream (531);
wherein the merger is adapted to receive the second partial data stream (532);
wherein the merger is adapted to merge the first partial data stream (531) and the second partial data stream (532) into an output data stream (533);
wherein the bandwidth controller (410) is adapted to control a merging, wherein the merging is performed according to a first capacity of the first channel (101) and to a second capacity of the second channel (102);
**characterized in that**
wherein the bandwidth controller (410) is adapted to control a merging, wherein the merging is performed on data blocks of one or more bytes;
wherein the bandwidth controller (410) is adapted to control a merging, wherein the merging is performed on frames of a duration which is the same for the first channel and the second channel.

8. A system according to claim 6 or 7 comprising
a first network device (205) and
a second network device (212),
wherein the first network device (205) is connected with the second network device (212) over a first path (111) and over a second path (112).

9. The system according to claim 8,
wherein the first path (111) and the second path (112) are operated in parallel.

10. The system according to claim 8 or 9,
wherein the bandwidth controller (410) receives information on the capacity of the first channel (101) from a first Adaptive Coding and Modulation engine (206); and
wherein the bandwidth controller (410) receives information on the capacity of the second channel (102) from a second Adaptive Coding and Modulation engine (306).

11. A computer program product comprising code portions for causing a network device, on which the computer program is executed, to carry out the method according to any of the claims 1 to 5.

12. A computer-readable medium embodying the computer program product according to claim 11.

## Patentansprüche

1. Verfahren zum Teilen eines Datenstroms, wobei das Verfahren umfasst:
Teilen des Datenstroms (530) in einen ersten partiellen Datenstrom (531) und einen zweiten partiellen Datenstrom (532);
Übertragen des ersten partiellen Datenstroms über einen ersten Pfad (111), der einen ersten Kanal (101) umfasst;
Übertragen des zweiten partiellen Datenstroms über einen zweiten Pfad (112), der einen zweiten Kanal (102) umfasst;
Empfangen des ersten partiellen Datenstroms (531);
Empfangen des zweiten partiellen Datenstroms (532); und
Mischen des ersten partiellen Datenstroms (531) und des zweiten partiellen Datenstroms (532) zu einem Ausgangsdatenstrom (533);
wobei das Teilen gemäß einer ersten Kapazität des ersten Kanals (101) und einer zweiten Kapazität des zweiten Kanals (102) durchgeführt wird;
**dadurch gekennzeichnet, dass** es außerdem Folgendes umfasst:
Teilen der Daten in Blöcke von einem oder mehreren Bytes;
Einbetten der geteilten Daten in Rahmen einer Dauer, die für den ersten Kanal und den zweiten Kanal dieselbe ist.

2. Verfahren nach Anspruch 1, wobei das Verfahren ferner umfasst: Teilen der Daten gemäß im Voraus definierten Profilen einer adaptiven Codierungs- und Modulationsmaschine.

3. Verfahren nach Anspruch 2, wobei das Verfahren ferner umfasst: Speichern der im Voraus definierten Profile in im Voraus berechneten Parameteranordnungen.

4. Verfahren nach einem der vorstehenden Ansprüche, wobei das Verfahren ferner umfasst: Abgleichen der Kapazität jedes Kanals mit den tatsächlichen Übertragungsbedingungen durch adaptive Codierung und Modulation.

5. Verfahren nach einem der vorstehenden Ansprüche, wobei das Verfahren ferner umfasst: Einstellen der Kanalkapazität auf null, wenn mindestens ein Qualitätsparameter des Kanals unter einen im Voraus definierten Schwellenwert fällt.

6. Netzwerkvorrichtung (205) zum Teilen eines Datenstroms, umfassend
eine Bandbreitensteuerung (410); und
einen Teiler (411);
wobei die Bandbreitensteuerung (410) angepasst ist zum Steuern des Teilers (411);
wobei der Teiler (411) angepasst ist zum Teilen des Datenstroms (530) in einen ersten partiellen Datenstrom (531) und einen zweiten partiellen Datenstrom (532);
wobei der Teiler (411) angepasst ist zum Übertragen des ersten partiellen Datenstroms über einen ersten Pfad (111), der einen ersten Kanal (101) umfasst;
wobei der Teiler (411) angepasst ist zum Übertragen des zweiten partiellen Datenstroms über einen zweiten Pfad (112), der einen zweiten Kanal (102) umfasst;
wobei die Bandbreitensteuerung (410) angepasst ist zum Steuern eines Teilens, wobei das Teilen gemäß einer ersten Kapazität des ersten Kanals (101) und einer zweiten Kapazität des zweiten Kanals (102) durchgeführt wird;
**dadurch gekennzeichnet, dass**
der Teiler (411) angepasst ist zum Teilen der Daten in Blöcke von einem oder mehreren Bytes;
der Teiler (411) angepasst ist zum Einbetten der geteilten Daten in Rahmen einer Dauer, die für den ersten Kanal und den zweiten Kanal dieselbe ist.

7. Netzwerkvorrichtung (212) zum Mischen eines ersten partiellen Datenstroms (531) und eines zweiten partiellen Datenstroms (532), wobei die Netzwerkvorrichtung umfasst:
eine Bandbreitensteuerung (410); und
einen Mischer (418);
wobei die Bandbreitensteuerung (410) angepasst ist zum Steuern des Mischers (418);
wobei der Mischer angepasst ist zum Empfangen des ersten partiellen Datenstroms (531);
wobei der Mischer angepasst ist zum Empfangen des zweiten partiellen Datenstroms (532);
wobei der Mischer angepasst ist zum Mischen des ersten partiellen Datenstroms (531) und des zweiten partiellen Datenstroms (532) zu einem Ausgangsdatenstrom (533);
wobei die Bandbreitensteuerung (410) angepasst ist zum Steuern eines Mischens, wobei das Mischen gemäß einer ersten Kapazität des ersten Kanals (101) und einer zweiten Kapazität des zweiten Kanals (102) durchgeführt wird;
wobei die Bandbreitensteuerung (410) angepasst ist zum Steuern eines Mischens, wobei das Mischen an Datenblöcken von einem oder mehreren Bytes durchgeführt wird;
wobei die Bandbreitensteuerung (410) angepasst ist zum Steuern eines Mischens, wobei das Mischen an Rahmen einer Dauer, die für den ersten Kanal und den zweiten Kanal dieselbe ist, durchgeführt wird.

8. System nach Anspruch 6 oder 7, umfassend
eine erste Netzwerkvorrichtung (205) und
eine zweite Netzwerkvorrichtung (212),
wobei die erste Netzwerkvorrichtung (205) über einen ersten Pfad (111) und über einen zweiten Pfad (112) mit der zweiten Netzwerkvorrichtung (212) verbunden ist.

9. System nach Anspruch 8,
wobei der erste Pfad (111) und der zweite Pfad (112) parallel betrieben werden.

10. System nach Anspruch 8 oder 9,
wobei die Bandbreitensteuerung (410) Informationen über die Kapazität des ersten Kanals (101) von einer ersten adaptiven Codierungs- und Modulationsmaschine (206) empfängt; und
wobei die Bandbreitensteuerung (410) Informationen über die Kapazität des zweiten Kanals (102) von einer zweiten adaptiven Codierungs- und Modulationsmaschine (306) empfängt.

11. Computerprogrammprodukt, umfassend Codeabschnitte zum Bewirken, dass eine Netzwerkvorrichtung, in der das Computerprogramm ausgeführt wird, das Verfahren nach einem der Ansprüche 1 bis 5 ausführt.

12. Computerlesbares Medium, das das Computerprogrammprodukt nach Anspruch 11 verkörpert.

## Revendications

1. Un procédé de division d'un flux de données, le procédé comprenant :
la division du flux de données (530) en un premier flux de données partiel (531) et un deuxième flux de données partiel (532),
la transmission du premier flux de données partiel par l'intermédiaire d'un premier chemin (111) comprenant un premier canal (101),
la transmission du deuxième flux de données partiel par l'intermédiaire d'un deuxième chemin (112) comprenant un deuxième canal (102),
la réception du premier flux de données partiel (531),
la réception du deuxième flux de données partiel (532), et
la fusion du premier flux de données partiel (531) et du deuxième flux de données partiel (532) en un flux de données en sortie (533),
dans lequel la division est exécutée selon une première capacité du premier canal (101) et selon une deuxième capacité du deuxième canal (102),
**caractérisé en ce qu'**il comprend également
la division des données en blocs d'un ou de plusieurs octets,
l'incorporation des données divisées dans des trames d'une durée qui est la même pour le premier canal et le deuxième canal.

2. Le procédé selon la revendication 1, le procédé comprenant en outre la division des données selon des profils prédéfinis d'un moteur de modulation et de codage adaptatifs.

3. Le procédé selon la revendication 2, le procédé comprenant en outre la conservation en mémoire des profils prédéfinis dans des matrices de paramètres précalculés.

4. Le procédé selon l'une quelconque des revendications précédentes, le procédé comprenant en outre la mise en correspondance de la capacité de chaque canal avec les conditions de transmission réelles par modulation et codage adaptatifs.

5. Le procédé selon l'une quelconque des revendications précédentes, le procédé comprenant en outre le réglage de la capacité de canal sur zéro si au moins un paramètre de qualité du canal passe sous un seuil prédéfini.

6. Un dispositif de réseau (205) destiné à la division d'un flux de données comprenant
un dispositif de commande de bande passante (410), et
un diviseur (411),
le dispositif de commande de bande passante (410) étant adapté de façon à commander le diviseur (411),
le diviseur (411) étant adapté de façon à diviser le flux de données (530) en un premier flux de données partiel (531) et un deuxième flux de données partiel (532),
le diviseur (411) étant adapté de façon à transmettre le premier flux de données partiel par l'intermédiaire d'un premier chemin (111) comprenant un premier canal (101),
le diviseur (411) étant adapté de façon à transmettre le deuxième flux de données partiel par l'intermédiaire d'un deuxième chemin (112) comprenant un deuxième canal (102),
le dispositif de commande de bande passante (410) étant adapté de façon à commander une division, la division étant exécutée selon une première capacité du premier canal (101) et selon une deuxième capacité du deuxième canal (102)
**caractérisé en ce que**
le diviseur (411) est adapté de façon à diviser les données en blocs d'un ou de plusieurs octets,
le diviseur (411) est adapté de façon à incorporer les données divisées dans des trames d'une durée qui est la même pour le premier canal et le deuxième canal.

7. Un dispositif de réseau (212) destiné à la fusion d'un premier flux de données partiel (531) et d'un deuxième flux de données partiel (532), le dispositif de réseau comprenant
un dispositif de commande de bande passante (410), et un dispositif de fusion (418),
le dispositif de commande de bande passante (410) étant adapté de façon à commander le dispositif de fusion (418),
le dispositif de fusion étant adapté de façon à recevoir le premier flux de données partiel (531),
le dispositif de fusion étant adapté de façon à recevoir le deuxième flux de données partiel (532),
le dispositif de fusion étant adapté de façon à fusionner le premier flux de données partiel (531) et le deuxième flux de données partiel (532) en un flux de données en sortie (533),
le dispositif de commande de bande passante (410) étant adapté de façon à commander une fusion, la fusion étant exécutée selon une première capacité du premier canal (101) et selon une deuxième capacité du deuxième canal (102),
**caractérisé en ce que**
le dispositif de commande de bande passante (410) est adapté de façon à commander une fusion, la fusion étant exécutée sur des blocs de données d'un ou de plusieurs octets,
le dispositif de commande de bande passante (410) est adapté de façon à commander une fusion, la fusion étant exécutée sur des trames d'une durée qui est la même pour le premier canal et le deuxième canal.

8. Un système selon la revendication 6 ou 7 comprenant
un premier dispositif de réseau (205) et
un deuxième dispositif de réseau (212),
le premier dispositif de réseau (205) étant raccordé au deuxième dispositif de réseau (212) par l'intermédiaire d'un premier chemin (111) et par l'intermédiaire d'un deuxième chemin (112).

9. Le système selon la revendication 8,
dans lequel le premier chemin (111) et le deuxième chemin (112) sont utilisés en parallèle.

10. Le système selon la revendication 8 ou 9,
dans lequel le dispositif de commande de bande passante (410) reçoit des informations relatives à la capacité du premier canal (101) à partir d'un premier moteur de modulation et de codage adaptatifs (206),
dans lequel le dispositif de commande de bande passante (410) reçoit des informations relatives à la capacité du deuxième canal (102) à partir d'un deuxième moteur de modulation et de codage adaptatifs (306).

11. Un produit de programme informatique contenant des parties de code destinées à amener un dispositif de réseau, sur lequel le programme informatique est exécuté, à mettre en oeuvre le procédé selon l'une quelconque des revendications 1 à 5.

12. Un support lisible par ordinateur contenant le produit de programme informatique selon la revendication 11.
